# EUROPÄISCHE PATENTSCHRIFT

(11) **EP 1 630 715 B1**
(45) Veröffentlichungstag und Bekanntmachung des Hinweises auf die Patenterteilung: **03.10.2007**
(21) Anmeldenummer: 05018246.8
(22) Anmeldetag: 23.08.2005
(51) Int. Cl.: G06K 7/00, G06K 19/07

(54) **Verfahren zur Auswahl eines oder mehrerer Transponder**
Method for selecting one or more transponders
Procédé pour sélectionner un ou plusieurs transpondeurs

(30) Priorität: 27.08.2004 DE 102004041437
(43) Veröffentlichungstag der Anmeldung: 01.03.2006
(73) Patentinhaber: ATMEL Germany GmbH, 74072 Heilbronn (DE)
(72) Erfinder: Pangels, Michael, Dipl.-Ing., 71642 Ludwigsburg (DE); Friedrich, Ulrich, Dipl.-Ing. (FH), 74248 Ellhofen (DE)

(56) Entgegenhaltungen:
- US-A- 6 154 136
- US-A1- 2001 014 090
- US-A1- 2003 179 078
- US-A1- 2004 160 310
- US-B1- 6 538 563

## Beschreibung

Die Erfindung bezieht sich auf Verfahren zur Auswahl eines oder mehrerer, insbesondere rückstreubasierter, Transponder aus einer Vielzahl von Transpondern durch eine Basisstation, gemäß dem Oberbegriff des Anspruchs 1.

Derartige Auswahlverfahren, die auch als Antikollisionsverfahren bezeichnet werden, finden beispielsweise bei kontaktlosen Identifikationssystemen oder sogenannten Radio-Frequency-Identification(RFID)-Systemen Verwendung. Ein derartiges System besteht üblicherweise aus einer Basisstation bzw. einem Lesegerät und einer Vielzahl von Transpondern oder Remote-Sensoren, die sich gleichzeitig im Ansprechbereich der Basisstation befinden. Wenn die Datenübertragung nur zwischen einem bzw. einer Gruppe von Transpondern und der Basisstation erfolgen soll, muss vor der entsprechenden Datenübertragung ein solches Auswahlverfahren durchgeführt werden.

Grundsätzlich wird hierbei zwischen stochastischen und deterministischen Auswahlverfahren unterschieden. Eine ausführliche Beschreibung sowohl zu deterministischen Auswahlverfahren als auch zu stochastischen Auswahlverfahren findet sich beispielsweise in dem Lehrbuch Klaus Finkenzeller, RFID-Handbuch, 3. Aufl., HANSER, 2002, siehe insbesondere Kapitel 7.2 Vielfachzugriffsverfahren.

Stochastische Verfahren setzen im Gegensatz zu deterministischen Verfahren keine eindeutige, sogenannte Unique-Identification(U-ID) voraus, deren Aufbau beispielsweise in der Norm ISO 15963 beschrieben ist. Eine Vergabe derartiger U-IDs wird unter anderem von verschiedenen herstellerunabhängigen Organisationen vorgenommen, beispielsweise der EAN/UCC oder der IATA. Die Vergabe kann jedoch auch von einem Hersteller selbst vorgenommen werden. Insgesamt kann folglich in offenen Systemen, bei denen sich Transponder beliebiger Hersteller im Ansprechbereich einer Basisstation befinden können, die Eindeutigkeit der U-ID nicht immer sichergestellt werden. Stochastische Verfahren ermöglichen eine Auswahl auch in diesen Fällen. Beispiele für derartige stochastische Verfahren sind das sogenannte ALOHA-Verfahren, das slotbasierte bzw. slotted ALOHA-Verfahren sowie das dynamische slotbasierte ALOHA-Verfahren. Solch ein ALOHA-Verfahren ist beispielsweise in US 2001/014090 A1 offenbart.

Das ALOHA-Verfahren ist ein transpondergesteuertes, stochastisches Verfahren, bei dem die Transponder zeitversetzt ihre zu übertragenden Daten senden. Der Zeitversatz wird in der Regel auf Basis einer im Transponder erzeugten Zufallszahl eingestellt. Wenn mehrere Transponder eine Kennung innerhalb des gleichen Zeitschlitzes senden, tritt eine sogenannte Kollision auf. Dies verhindert üblicherweise, dass die Basisstation die gesendeten Daten fehlerfrei empfangen kann.

Beim slotbasierten ALOHA-Verfahren ist die Kollisionswahrscheinlichkeit im Vergleich zum einfachen ALOHA-Verfahren deutlich reduziert. Es ist ein von der Basisstation gesteuertes, stochastisches Verfahren, bei dem die Transponder nur zu definierten, synchronen Zeitpunkten aktiv sind, d.h. mit der Übertragung von Daten beginnen. Hierzu gibt die Basisstation nummerierte Zeitschlitze bzw. Slots vor und die Transponder erzeugen jeweils eine Zufallszahl, wobei jeder Transponder, dessen Zufallszahl der Nummer eines Zeitschlitzes entspricht, Daten bzw. eine Kennung in diesem Zeitschlitz an die Basisstation sendet. Zur Einleitung des Auswahlverfahrens sendet die Basisstation in der Regel ein Kommando an die Transponder, durch das der Beginn einer Auswahlprozedur angezeigt wird. Nach Empfang des Kommandos können in den Transpondern die jeweiligen Zufallszahlen gespeichert werden, die beispielsweise vorher im Transponder erzeugt bzw. berechnet wurden. Wenn lediglich ein Transponder eine Kennung innerhalb eines Zeitschlitzes sendet, ist dieser Transponder innerhalb des Zeitschlitzes ausgewählt bzw. kann durch die Basisstation durch Senden eines Kommandos bzw. eines Quittungssignals ausgewählt werden. Die Basisstation kann dann beispielsweise Schreib- und/oder Leseoperationen auf diesem Transponder ausführen.

Wenn mehrere Transponder eine Kennung innerhalb des gleichen Zeitschlitzes senden, tritt eine Kollision auf. Abhängig von der Bitkodierung kann die Basisstation eine solche Kollision unmittelbar oder mit Verzögerung erkennen und den entsprechenden Zeitschlitz überspringen und versuchen Zeitschlitze abzuarbeiten, in denen keine Kollision auftritt, oder eine neue Auswahlprozedur durch Senden eines entsprechenden Kommandos an die Transponder einleiten. Da die Transponder üblicherweise neue Zufallszahlen erzeugen bzw. speichern, besteht die Möglichkeit, dass nun keine Kollision mehr auftritt.

Die Kollisionswahrscheinlichkeit hängt von der Anzahl der Transponder im Ansprechbereich der Basisstation und der Anzahl der zur Verfügung gestellten Zeitschlitze ab. Da die Anzahl der Transponder stark schwanken kann, kann eine statische Festlegung der Anzahl der Zeitschlitze zu Problemen führen. Ist die Anzahl der Zeitschlitze zu klein, nimmt die Kollisionswahrscheinlichkeit stark zu. Ist die Anzahl der Zeitschlitze zu groß, gibt es entsprechend viele Zeitschlitze, in denen kein Transponder Daten überträgt. Die für das Auswahlverfahren benötigte Zeit nimmt somit in beiden Fällen stark zu. Um einen optimalen Durchsatz zu erzielen, sollte die Anzahl der Zeitschlitze, in denen die Transponder Daten übertragen, in etwa gleich der Anzahl der Transponder gewählt werden.

Zur Lösung dieses Problems existiert das dynamische slotbasierte ALOHA-Verfahren, bei dem die Anzahl der zur Verfügung stehenden Zeitschlitze durch die Basisstation gesteuert werden kann. Beispielsweise kann die Basisstation ein Auswahlverfahren mit einer geringen Anzahl von Zeitschlitzen einleiten. Wenn hierbei häufig Kollisionen auftreten, kann die Basisstation ein neues Auswahlverfahren einleiten, bei dem die Anzahl der Zeitschlitze erhöht wird, wodurch die Kollisionswahrscheinlichkeit abnimmt.

Zur Erzeugung einer Zufallszahl für die stochastischen Verfahren sind unterschiedliche Verfahren bekannt. So kann beispielsweise die Zeit zwischen einem Reset des Transponders und dem Zeitpunkt, an dem ein erstes Zeichen empfangen wird, als Basis zur Berechnung der Zufallszahl dienen. Andere Verfahren verknüpfen Zahlen aus zwei unterschiedlichen Speicherbereichen des Transponders miteinander, um die Zufallszahl zu ermitteln, wobei zur Verfeinerung zusätzlich noch ein empfangenes Datum in die Berechnung mit einbezogen werden kann.

Weitere Verfahren verwenden ein lineares rückgekoppeltes Schieberegister zur Zufallszahlenerzeugung, das beispielsweise mit einer Taktversorgung betrieben werden kann, die zwischen unterschiedlichen Transpondern eine gewisse Streuung aufweist. Nach einer gewissen Betriebszeit weisen die Schieberegister unterschiedlicher Transponder aufgrund ihrer individuellen Taktversorgung dann verschiedene Werte auf, die als Zufallszahlen verwendbar sind.

Beim slotbasierten ALOHA-Auswahlverfahren gibt die Basisstation nummerierte Zeitschlitze bzw. Slots vor und ein Transponder, dessen Zufallszahl der Nummer eines Zeitschlitzes entspricht, sendet Daten bzw. eine Kennung in diesem Zeitschlitz an die Basisstation.

Im Dokument US 6 538 563 B1, das den Oberbegriff des Anspruchs 1 bildet, ist hierzu in einem Transponder neben dem Zufallszahlengenerator noch ein sogenannter Slotzähler und ein binärer Komparator vorgesehen. Nach der Einleitung des Auswahlverfahrens durch die Basisstation wird der Slotzähler beginnend mit einem Anfangswert dekrementiert bzw. inkrementiert, wenn die Basisstation den Beginn eines neuen Slots bzw. Zeitschlitzes durch Senden eines entsprechenden Kommandos anzeigt. Der binäre Komparator vergleicht die im Zufallszahlengenerator vorhandene Zufallszahl mit der aktuellen Slotnummer des Slotzählers und, wenn Zufallszahl und Slotnummer übereinstimmen, überträgt der entsprechende Transponder seine Kennung an die Basisstation. Da der Zufallszahlengenerator und der Slotzähler als getrennte Einheiten aufgebaut sind, benötigt eine derartige Realisierung relativ viel Chipfläche.

Der Erfindung liegt als technisches Problem die Bereitstellung eines Verfahrens zur Auswahl eines oder mehrerer Transponder aus einer Vielzahl von Transpondern durch eine Basisstation zugrunde, das eine zuverlässige und zeitsparende Auswahl ermöglicht und bei einer Umsetzung in einem Transponder vergleichsweise wenig Chipfläche benötigt.

Die Erfindung löst dieses Problem durch die Bereitstellung eines Verfahrens mit den Merkmalen des Anspruchs 1.

Erfindungsgemäß wird in einem jeweiligen Transponder die Zufallszahl mit Hilfe eines Zufallszahlengenerators erzeugt. Der Zufallszahlengenerator wird nach dem Empfang eines von der Basisstation gesendeten Auswahlkommandos in einen Zählerbetriebszustand umgeschaltet.

Während des Zählerbetriebszustands arbeitet der Zufallszahlengenerator als normaler Zähler bzw. Slotzähler. Der Zählerstand des als Zähler arbeitenden Zufallszahlengenerators wird dekrementiert oder inkrementiert, wenn die Basisstation den Beginn eines Zeitschlitzes überträgt. Wenn der Zählerstand des Zufallszahlengenerators gleich einem vorbestimmten Wert ist, überträgt der jeweilige Transponder eine transponderspezifische Kennung an die Basisstation. Der jeweilige Zufallszahlengenerator wird anschließend wieder in den Betriebszustand zur Zufallszahlenerzeugung umgeschaltet. Dadurch, dass der Zufallszahlengenerator während bestimmter Zeitintervalle auch als Slotzähler dient, kann ein getrennter, nur zu diesem Zeck dienender Slotzähler entfallen. Dies reduziert die benötigte Chipfläche. Durch die Umschaltung des Zufallszahlengenerators nach dem Senden der transponderspezifischen Kennung in den Betriebszustand zur Zufallszahlenerzeugung erfolgt frühestmöglich der Beginn einer erneuten Zufallszahlenerzeugung. Dies stellt im Falle einer Zufallszahlenerzeugung, die auf einer Streuung der Taktversorgung basiert, sicher, dass der Zufallszahlenraum möglichst optimal ausgenutzt wird, da sich die Unterschiede in der Taktversorgung verschiedener Transponder aufgrund der längeren Zeitdauer der Zufallszahlenerzeugung stärker auswirken. Wenn im Anschluss an das aktuelle Auswahlverfahren ein weiteres Auswahlverfahren durchgeführt werden soll, beispielsweise weil innerhalb eines Slots Kollisionen aufgetreten sind, stehen somit frühzeitig verwertbare Zufallszahlen in den jeweiligen Transpondern zur Verfügung, wodurch keine Wartezeit zwischen aufeinanderfolgenden Auswahlverfahren notwendig ist.

In einer Weiterbildung des Verfahrens nach Anspruch 2 wird die Zufallszahl mit Hilfe eines linearen rückgekoppelten Schieberegisters erzeugt. Derartige Schieberegister können einfach zwischen dem Betriebszustand zur Erzeugung der Zufallszahl und dem Zählerbetriebszustand umgeschaltet werden. Weiterhin lassen sich mit Hilfe derartiger Bauelemente in Kombination mit einer Streuung bzw. Ungenauigkeit einer Taktversorgung, die zum Takten des Schieberegisters dient, einfach Zufallszahlen erzeugen.

In einer Weiterbildung des Verfahrens nach Anspruch 3 hängt das Umschalten in den Betriebszustand zur Erzeugung der Zufallszahlen davon ab, ob die Basisstation im Anschluss an die Übertragung der transponderspezifischen Kennung ein Kommando an den Transponder überträgt. Beispielsweise kann ein Umschalten in den Betriebszustand zur Erzeugung der Zufallszahlen dann unterbleiben, wenn die Basisstation ein Quittungskommando an den entsprechenden Transponder sendet. Durch das Quittungskommando wird die Auswahl des Transponders angezeigt, d.h. er muss nicht notwendigerweise an einem nachfolgenden Auswahlverfahren teilnehmen. In diesem Fall kann das sofortige Umschalten in den Betriebszustand zur Erzeugung der Zufallszahlen in diesem Transponder unterbleiben, wodurch sich die Leistungsaufnahme des Transponders verringert und somit seine Übertragungsreichweite vergrößert wird.

In einer Weiterbildung des Verfahrens nach Anspruch 4 ist ein anfänglicher Zählerstand des Zufallszahlengenerators die erzeugte Zufallszahl und der jeweilige Transponder überträgt seine transponderspezifische Kennung an die Basisstation, wenn der Zählerstand seines Zufallsgenerators Null ist. Der Zufallszahlengenerator wechselt hierbei lediglich in den Zählerbetriebszustand und dekrementiert bzw. inkrementiert anschließend den Zählerstand. Ein separates Speicherelement zur Speicherung der Zufallszahl ist somit nicht notwendig, wodurch die benötigte Chipfläche reduziert wird. Die Erkennung, dass der Zählerstand den Wert NULL angenommen hat, lässt sich schaltungstechnisch einfacher realisieren, als ein Vergleich mit einem beliebigen Wert. Dies reduziert wiederum die benötigte Chipfläche.

In einer Weiterbildung des Verfahrens nach Anspruch 5 wird die erzeugte Zufallszahl abgespeichert, anschließend der Zählerstand des Zufallszahlengenerators auf einen Anfangswert, insbesondere Null, gesetzt und der jeweilige Transponder überträgt seine transponderspezifische Kennung an die Basisstation, wenn der Zählerstand gleich dem abgespeicherten Wert der Zufallszahl ist.

Eine vorteilhafte Ausführungsform der Erfindung ist in den Zeichnungen dargestellt und wird nachfolgend beschrieben. Hierbei zeigen schematisch:
- Fig. 1: ein Blockschaltbild eines Transponders mit einem Zufallszahlengenerator, der in einem Betriebszustand zur Zufallszahlenerzeugung oder in einem Zählerbetriebszustand betrieben wird, einer Steuerlogikeinheit und einer Null-Erkennungs-Einheit,
- Fig. 2: ein Zeitablaufdiagramm von Steuersignalen der in Fig. 1 gezeigten Einheiten während eines Auswahlvorgangs und
- Fig. 3: ein Zustandsdiagramm des Transponders von Fig. 1 während des in Fig. 2 gezeigten Auswahlvorgangs.

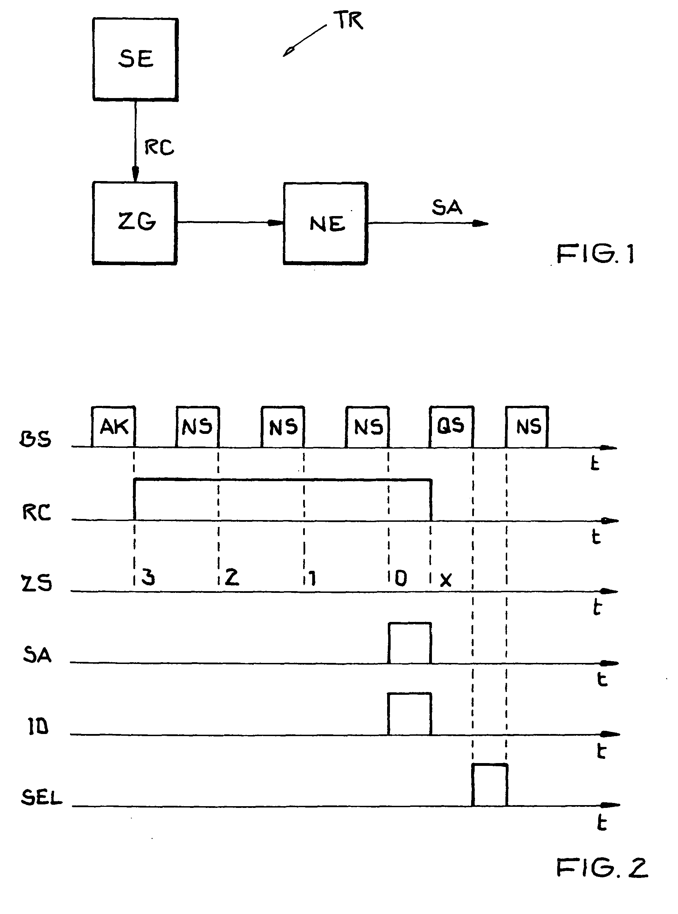

Fig. 1 zeigt ein Blockschaltbild eines rückstreubasierten, passiven Transponders TR mit einer Steuerlogikeinheit SE, einem Zufallszahlengenerator ZG, der in Abhängigkeit von einem durch die Steuerlogikeinheit SE bereitgestellten Signal RC entweder in einem Betriebszustand zur Zufallszahlenerzeugung oder in einem Zählerbetriebszustand arbeitet, und einer Null-Erkennungs-Einheit NE, die ein Signal SA bereitstellt, welches das Senden einer transponderspezifischen Kennung an eine Basisstation freigibt.

Im Betriebszustand zur Zufallszahlenerzeugung ist der Zufallszahlengenerator ZG als ein lineares rückgekoppeltes Schieberegister konfiguriert, das mit einem im Transponder TR bereitgestellten Takt betrieben wird. Der im Transponder TR bereitgestellte Takt weist zwischen unterschiedlichen Transpondern eine gewisse Streuung auf, wodurch sich nach einer Laufzeit unterschiedliche Werte im Schieberegister der jeweiligen Transponder einstellen. Im Zählerbetriebszustand ist der Zufallszahlengenerator ZG als herkömmlicher Zähler konfiguriert, beispielsweise als sogenannter Ripple-Counter.

Die Null-Erkennungs-Einheit NE ist mit dem Zufallszahlengenerator ZG gekoppelt und überwacht den Zählerstand des Zufallszahlengenerators ZG, wenn dieser im Zählerbetriebszustand ist. Ist der Zählerstand des Zufallszahlengenerators ZG Null, wird das Signal SA aktiv, wodurch das Senden der transponderspezifischen Kennung an die Basisstation aktiviert wird.

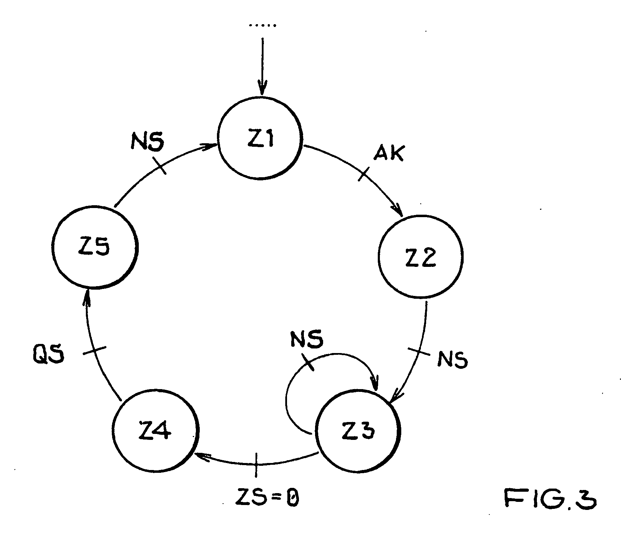

Fig. 2 zeigt ein Zeitablaufdiagramm von Steuersignalen der in Fig. 1 gezeigten Einheiten während eines Auswahlvorgangs durch eine Basisstation BS. Das Auswahlverfahren bzw. der Auswahlvorgang basiert auf einem slotbasierten ALOHA-Auswahlverfahren oder auf einem slotbasierten dynamischen ALOHA-Auswahlverfahren.

Die Basisstation leitet den Auswahlvorgang durch Senden eines Auswahlkommandos AK ein. Der Transponder TR empfängt das Auswahlkommando AK. Die Steuerlogikeinheit SE aktiviert daraufhin das Signal RC durch einen Pegelwechsel von Low nach High. Der Zufallszahlengenerator ZG wird in Folge des Pegelwechsels des Signals RC vom Betriebszustand der Zufallszahlenerzeugung durch Takten des linearen rückgekoppelten Schieberegisters in den Zählerbetriebszustand umgeschaltet. Während des Zählerbetriebszustandes wird ein Zählerstand ZS des Zufallszahlengenerators dekrementiert, wenn die Basisstation den Beginn eines Zeitschlitzes überträgt. Der anfängliche Zählerstand ZS ist hierbei die vor der Umschaltung in den Zählerbetriebszustand im Schieberegister enthaltene Zufallszahl. Im gezeigten Ausführungsbeispiel ist der anfängliche Zählerstand ZS 3.

Die Basisstation überträgt nun ein Kommando NS, das den Beginn eines Zeitschlitzes anzeigt. Daraufhin wird der Zählerstand ZS des Zufallszahlengenerators ZG um eins auf zwei erniedrigt. Die Null-Erkennungs-Einheit NE überprüft, ob der Zählerstand ZS Null ist. Da dies noch nicht der Fall ist, bleibt das Signal SA auf einem Low-Pegel.

Die Basisstation BS überträgt nun in Folge zwei weitere Kommandos NS, wobei der Zählerstand ZS wiederum jeweils um eins erniedrigt wird. Nach dem letzten Kommando NS beträgt der Zählerstand ZS Null. Die Null-Erkennungs-Einheit NE erkennt dies und aktiviert das Signal SA durch einen Pegelwechsel von Low nach High. Der Transponder TR überträgt daraufhin eine transponderspezifische Kennung ID an die Basisstation BS.

Die Basisstation BS empfängt die transponderspezifische Kennung ID und sendet ein Quittungssignal QS an den Transponder TR. Der Transponder TR ist nun innerhalb des aktuellen Zeitschlitzes ausgewählt, was durch ein Signal SEL angezeigt wird. Die Basisstation BS kann dann beispielsweise nicht gezeigte Schreib- und/oder Leseoperationen auf dem Transponder TR ausführen.

Im Anschluss an die Übertragung der transponderspezifischen Kennung ID durch den Transponder TR deaktiviert die Steuerlogikeinheit SE das Signal RC durch einen Pegelwechsel von High nach Low. Der Zufallszahlengenerator ZG wird in Folge des Pegelwechsels des Signals RC wieder in den Betriebszustand zur Zufallszahlenerzeugung durch Takten des linearen rückgekoppelten Schieberegisters umgeschaltet, wobei dem Scheiberegister ein Anfangswert X zugewiesen wird. Diese Umschaltung könnte im gezeigten Fall auch unterbleiben, da die Basisstation BS das Quittungssignal QS sendet.

Nachdem die erforderlichen Operationen mit dem Transponder TR abgeschlossen sind, überträgt die Basisstation BS ein weiteres Kommando NS, wodurch ein neuer Zeitschlitz angezeigt wird, in dem andere, nicht gezeigte Transponder auswählbar sind. Der gezeigte Transponder zieht sich daraufhin aus dem aktuellen Auswahlvorgang zurück.

Fig. 3 zeigt ein Zustandsdiagramm des Transponders von Fig. 1 während des in Fig. 2 gezeigten Auswahlvorgangs. Am Beginn des Auswahlverfahrens, vor dem Empfang des Kommandos AK, befindet sich der Transponder TR in einem Grundzustand Z1. In diesem Zustand Z1 erzeugt der Zufallszahlengenerator ZG fortlaufend Zufallszahlen.

Wenn der Transponder TR das von der Basisstation BS gesendete Kommando AK empfängt, wechselt er in einen Zustand Z2. Im Zustand Z2 wird der Zufallszahlengenerator ZG in den Zählerbetriebszustand umgeschaltet. Der anfängliche Zählerstand ZS ist hierbei die vor der Umschaltung in den Zählerbetriebszustand im Schieberegister enthaltene Zufallszahl. Der Transponder wartet nun auf den Empfang eines Kommandos NS.

Wenn der Transponder TR das von der Basisstation BS gesendete Kommando NS empfängt, wechselt er in einen Zustand Z3 und dekrementiert den Zählerstand ZS. Im Zustand Z3 wird nach einem Empfang eines Kommandos NS von der Basisstation der Zählerstand ZS jeweils um eins dekrementiert.

Wenn der Zählerstand ZS Null beträgt, wechselt der Transponder TR in einen Zustand Z4, in dem er seine transponderspezifische Kennung ID an die Basisstation BS sendet. Der Zufallszahlengenerator ZG wird anschließend wieder in den Betriebszustand zur Zufallszahlenerzeugung umgeschaltet. Der Transponder wartet nun auf den Empfang des Quittungskommandos QS von der Basisstation BS.

Wenn der Transponder TR das von der Basisstation BS gesendete Quittungskommando QS empfängt, wechselt in einen Zustand Z5, während dem er ausgewählt ist. Die Basisstation BS kann dann beispielsweise nicht gezeigte Schreib- und/oder Leseoperationen auf dem Transponder TR ausführen.

Wenn der Transponder TR ein weiteres von der Basisstation BS gesendete Kommando NS empfängt, wechselt er wieder in den Zustand Z1, d.h. er zieht sich aus dem aktuellen Auswahlvorgang zurück und wartet auf ein neues Auswahlkommando AK.

Es versteht sich, dass die gezeigten Diagramme lediglich exemplarischen Charakter aufweisen und nur dazu dienen, das erfindungsgemäße Auswahlverfahren beispielhaft zu demonstrieren.

Alternativ zum gezeigten Ausführungsbeispiel kann die erzeugte Zufallszahl nach dem Empfang des Kommandos AK abgespeichert werden, wobei anschließend der Zählerstand des nun als Zähler arbeitenden Zufallszahlengenerators auf einen Anfangswert, insbesondere Null, gesetzt wird. Der Zählerstand wird wie im gezeigten Ausführungsbeispiel auch mit jedem Kommando NS inkrementiert. Der Transponder überträgt seine transponderspezifische Kennung an die Basisstation, wenn der Zählerstand gleich dem abgespeicherten Wert der Zufallszahl ist.

Die gezeigte Ausführungsform reduziert die Anzahl der für ein slotbasiertes Auswahlverfahren notwendigen Bauteile, wodurch die benötigte Chipfläche reduziert werden kann. Durch die frühzeitige Umschaltung auf erneute Zufallszahlenerzeugung wird zusätzlich der zur Verfügung stehende Zufallszahlenraum besser ausgenutzt. Dies ermöglicht einen unmittelbar anschließenden, weiteren Auswahlvorgang, wenn dieser notwendig ist.

## Patentansprüche

1. Verfahren zur Auswahl eines oder mehrerer, insbesondere rückstreubasierter, Transponder (TR) aus einer Vielzahl von Transpondern durch eine Basisstation (BS),
- dem ein slotbasiertes ALOHA-Auswahlverfahren zugrunde liegt, bei dem die Basisstation (BS) nummerierte Zeitschlitze vorgibt und eine in einem jeweiligen Transponder erzeugte Zufallszahl einen Zeitschlitz bestimmt, in dem der Transponder seine transponderspezifische Kennung (ID) an die Basisstation (BS) sendet, und bei dem
- in einem jeweiligen Transponder (TR) die Zufallszahl mit Hilfe eines Zufallszahlengenerators (ZG) erzeugt wird,
wobei das Verfahren weiter **dadurch gekennzeichnet ist, dass**
- der jeweilige Zufallszahlengenerator (ZG) nach dem Empfang eines von der Basisstation gesendeten Auswahlkommandos (AK) in einen Zählerbetriebszustand umgeschaltet wird, während dem ein Zählerstand (ZS) des Zufallszahlengenerators (ZG) dekrementiert oder inkrementiert wird, wenn die Basisstation (BS) den Beginn eines Zeitschlitzes überträgt,
- der jeweilige Transponder (TR) die transponderspezifische Kennung (ID) an die Basisstation (BS) überträgt, wenn der Zählerstand (ZS) seines Zufallszahlengenerators (ZG) gleich einem vorbestimmten Wert ist, und
- der jeweilige Zufallszahlengenerator (ZG) anschließend wieder in den Betriebszustand zur Zufallszahlenerzeugung umgeschaltet wird.

2. Verfahren nach Anspruch 1, **dadurch gekennzeichnet, dass** die Zufallszahl mit Hilfe eines linearen rückgekoppelten Schieberegisters erzeugt wird.

3. Verfahren nach Anspruch 1 oder 2, **dadurch gekennzeichnet, dass** das Umschalten in den Betriebszustand zur Erzeugung der Zufallszahlen davon abhängt, ob die Basisstation (BS) im Anschluss an die Übertragung der transponderspezifischen Kennung (ID) ein Kommando (QS) an den Transponder (TR) überträgt.

4. Verfahren nach einem der vorhergehenden Ansprüche, **dadurch gekennzeichnet, dass** ein anfänglicher Zählerstand (ZS) des Zufallszahlengenerators (ZG) die erzeugte Zufallszahl ist und der jeweilige Transponder (TR) seine transponderspezifische Kennung (ID) an die Basisstation (BS) überträgt, wenn der Zählerstand (ZS) seines Zufallsgenerators Null ist.

5. Verfahren nach einem der Ansprüche 1 bis 3, **dadurch gekennzeichnet, dass** die erzeugte Zufallszahl abgespeichert wird, anschließend der Zählerstand (ZS) des Zufallszahlengenerators (ZG) auf einen Anfangswert, insbesondere Null, gesetzt wird und der jeweilige Transponder (TR) seine transponderspezifische Kennung an die Basisstation überträgt, wenn der Zählerstand (ZS) gleich dem abgespeicherten Wert der Zufallszahl ist.

## Claims

1. Method for selecting one or more, particularly backscatter-based, transponders (TR) from a plurality of transponders by a base station (BS),
- which is based on a slot-based ALOHA selection method in which the base station (BS) presets numbered time slots and a random number generated in a respective transponder determines a time slot in which the transponder transmits its transponder-specific identification (ID) to the base station (BS), and in which
- the random number is generated in a respective transponder (TR) with the help of a random number generator (ZG),
wherein the method is further **characterised in that**
- the respective random number generator (ZG) after reception of a selection command (AK) transmitted by the base station is switched over into a counter operational state, during which a counter state (ZS) of the random number generator (ZG) is decremented or incremented when the base station (BS) transfers the start of a time slot,
- the respective transponder (TR) transfers the transponder-specific identification (ID) to the base station (BS) when the counter state (ZS) of its random number generator (ZG) is equal to a predetermined value and
- the respective random number generator (ZG) is subsequently switched back to the operational state for random number generation.

2. Method according to claim 1, **characterised in that** the random number is generated with the help of a linear feedback shift register.

3. Method according to claim 1 or 2, **characterised in that** switching over to the operational state for generation of the random numbers depends on whether the base station (BS) subsequently to the transfer of the transponder-specific identification (ID) transfers a command (QS) to the transponder (TR).

4. Method according to one of the preceding claims, **characterised in that** an initial counter state (ZS) of the random number generator (ZG) is the generated random number and the respective transponder (TR) transfers its transponder-specific identification (ID) to the base station (BS) when the counter state (ZS) of its random generator is zero.

5. Method according to one of claims 1 to 3, **characterised in that** the generated random number is stored, subsequently the counter state (ZS) of the random number generator (ZG) is set to an initial value, particularly zero, and the respective transponder (TR) transfers its transponder-specific identification to the base station when the counter state (ZS) is equal to the stored value of the random number.

## Revendications

1. Procédé de sélection par une station de base (BS) d'un ou de plusieurs transpondeurs (TR), en particulier de transpondeurs utilisant la rétrodiffusion, parmi une pluralité de transpondeurs,
. basé sur un procédé de sélection ALOHA en fonction de l'emplacement, dans lequel la station de base (BS) prédéfinit des intervalles de temps numériques et dans lequel un nombre aléatoire généré dans chacun des transpondeurs détermine un intervalle de temps au cours duquel le transpondeur transmet son identification spécifique de transpondeur (ID) à la station de base (BS),
. et dans lequel on génère dans chacun des transpondeurs (TR) le nombre aléatoire au moyen d'un générateur de nombres aléatoires (ZG),
le procédé étant par ailleurs **caractérisé en ce que** :
. chacun des générateurs de nombres aléatoires (ZG) est commuté, après la réception d'un ordre de sélection (AK) envoyé par la station de base, dans un état de fonctionnement du compteur, durant lequel on décrémente ou on incrémente une position affichée du compteur (ZS) du générateur de nombres aléatoires (ZG), lorsque la station de base (BS) envoie le début d'un intervalle de temps,
. chacun des transpondeurs (TR) transmet l'identité spécifique de transpondeur (ID) à la station de base (BS), lorsque la position affichée du compteur (ZS) de son générateur de nombres aléatoires (ZG) est égale à une valeur prédéfinie, et
. chacun des générateurs de nombres aléatoires (ZG) est ensuite commuté dans l'état de fonctionnement pour générer les nombres aléatoires.

2. Procédé selon la revendication 1, **caractérisé en ce que** l'on génère le nombre aléatoire au moyen d'un registre à glissement linéaire à réaction.

3. Procédé selon la revendication 1 ou 2, **caractérisé en ce que** la commutation dans l'état de fonctionnement pour la génération des nombres aléatoires dépend du fait si, consécutivement à la transmission de l'identification spécifique du transpondeur (ID), la station de base (BS) transmet un ordre (QS) au transpondeur (TR).

4. Procédé selon l'une quelconque des revendications précédentes, **caractérisé en ce qu'**une position affichée du compteur (ZS) initiale du générateur de nombres aléatoires (ZG) correspond au nombre aléatoire et **en ce que** chacun des transpondeurs (TR) transmet son identification spécifique de transpondeur (ID) à la station de base (BS) lorsque la position affichée du compteur (ZS) de son générateur aléatoire correspond à zéro.

5. Procédé selon l'une quelconque des revendications 1 à 3, **caractérisé en ce que** le nombre aléatoire généré est mémorisé, **en ce qu'**ensuite la position affichée du compteur (ZS) du générateur de nombres aléatoires (ZG) est mise à une valeur initiale, en particulier zéro, et **en ce que** chacun des transpondeurs (TR) transmet son identification spécifique de transpondeur à la station de base, lorsque la position affichée du compteur (ZS) est égale à la valeur mémorisée du nombre aléatoire.
